# EUROPEAN PATENT SPECIFICATION

(11) **EP 4 403 380 B1**
(45) Date of publication and mention of the grant of the patent: **08.04.2026**
(21) Application number: 22869909.6
(22) Date of filing: 09.09.2022
(51) Int. Cl.: B60C 9/18, B60C 9/22, B60C 9/20

(54) **TIRE**
REIFEN
PNEU

(30) Priority: 15.09.2021 JP 2021150395; 26.11.2021 JP 2021192053
(43) Date of publication of application: 24.07.2024
(73) Proprietor: BRIDGESTONE CORPORATION, Chuo-ku Tokyo 104-8340 (JP)
(72) Inventor: FUKUZAKI, Sho, Chuo-ku, Tokyo 104-8340 (JP); SUDA, Yuya, Chuo-ku, Tokyo 104-8340 (JP); YAMANE, Takemi, Chuo-ku, Tokyo 104-8340 (JP); KUWAYAMA, Isao, Chuo-ku, Tokyo 104-8340 (JP)
(74) Representative: Marks & Clerk LLP
(86) International application number: PCT/JP2022/033908
(87) International publication number: WO 2023/042762

(56) References cited:
- WO-A1-2009/093325
- WO-A1-2020/129973
- JP-A- 2005 255 060
- JP-A- 2006 111 106
- JP-A- 2008 195 264
- JP-A- 2012 071 679
- US-A- 5 529 105
- US-A1- 2018 186 189

## Description

### [Technical Field]

This disclosure relates to a tire having a reinforcing belt coated with a reinforcing cord extending along the tire width direction and the tire radial direction.

### [Background Art]

Conventionally, a pneumatic tire (hereinafter omitted as tire when appropriate) having a pair of crossing belt, in which the cords intersect is provided inside in the tire radial direction of the tread in contact with the road surface, has a structure including a spiral belt (belt reinforcing layer) having a cord extending along the tire circumferential direction and a belt (protection layer) having a cord extending along the tire width direction and along the tire radial direction (see Patent Literature 1).

In the tire having such a reinforcing belt, since the tensile strain of the cord of the belt reinforcing layer is suppressed by the protection layer, it is possible to maintain steering stability of the vehicle at the end of tire wear and improve the durability of the tire.

### [Citation List]

### [Patent Literature]

[Patent Literature 1]
Japanese Patent No. 5084834

Japan Published Patent Application No. 2012071679 A, discloses a pneumatic tire including: a carcass layer comprising at least a sheet of carcass ply extended in a toroidal shape between a right and left pair of bead cores; a belt layer disposed on an outer side in a tire radial direction of a crown section of the carcass layer; and a tread disposed on the outer side of the tire radial direction of the belt layer.

Japan Published Patent Application No. 2006111106A, discloses a belt layer of a pneumatic tire 31 that is partially deformed into an arc-shape at the position of a main groove when internal pressure is filled.

Japan Published Patent Application No. 2008195264A, discloses a pneumatic tire provided with a main cross layer having first and second cross belt layers between a tread part and a carcass layer, two reinforcing layers which are composed of many organic fiber cords having an inclination angle with respect to a tire equator direction falling within a range from 60 degrees to 90 degrees and a width of which is wider than that of the cross layer are provided, and either one of a rubber sheet layer and the main cross layer or both of them is/are arranged between the reinforcing layers to enhancing out-of-plane bending rigidity in a width direction.

International PCT Publication No. 2020/129973A1 discloses, a pneumatic tire provided with a crossing belt layer including: a first belt having a belt cord; and a second belt that is provided outside the first belt in the tire radial direction and has a belt cord crossing the belt cord.

International PCT Publication No. 2009/093325A1 discloses, a pneumatic tire provided with a protecting layer having reinforcing cords embedded inside being disposed between a tread and a belt strengthening layer. Thus, a strong bending force occurring when a pneumatic tire runs onto a sharp protrusion or level difference is distributed and applied to both of the protecting layer and the belt strengthening layer. As the result of this, even when reinforcing elements included in the belt strengthening layer is stretched with a strong tensile force by filled inner pressure, increase of strain occurring at the reinforcing elements can be suppressed effectively.

### [Summary of Invention]

A tire with a belt layer including a reinforcing belt as described above can maintain steering stability of the vehicle at the end of tire wear, in particular, but there is room for improvement with respect to steering stability in situations where greater input is generated to the tire (For example, sport driving).

Specifically, in a situation where a large lateral force is added, a part of such a belt layer is pushed up to the tire radial direction inside, and the ground contact pressure of the tread is released, which is a problem prone to the occurrence of so-called buckling. In particular, in an attempt to secure other performance on a wet road surface (such as braking and driving performance), buckling is likely to occur due to the relationship between the tread pattern and the tire rigidity, and it is difficult to secure steering stability.

Accordingly, the following disclosure is made in view of such a situation, and it is an object of the present invention to provide a tire capable of further improving steering stability, especially steering stability on a wet road surface, by using a reinforcing belt having a cord extending along the tire width direction and the tire radial direction.

In addition, the tire provided with the reinforcing belt as described above has high rigidity as a whole belt layer, but on the other hand, the rigidity level difference between the reinforcing belt and crossing belt becomes large. Therefore, a crack in the belt layer caused by such rigidity level difference is likely to occur, which causes a failure.

Therefore, the following disclosure has been made in view of such a situation, and it is also an object of the present invention to provide a tire capable of suppressing the deterioration of durability due to crack development in the belt layer while using a reinforcing belt using a cord extending along the tire width direction and the tire radial direction.

Thus, the following disclosure has the object of providing a tire capable of improving steering stability on a wet road surface and suppressing the deterioration of durability due to crack development in the belt layer.

An aspect of the present invention is a tire (pneumatic tire 10) according to claim 1.

Another aspect of the present invention is a tire (pneumatic tire 10A) according to claim 4.

### [Brief Description of Drawings]

[FIG. 1] FIG. 1 is a cross-sectional view of a pneumatic tire 10 along the tire width direction and the tire radial direction.
[FIG. 2] FIG. 2 is a partially enlarged cross-sectional view of the pneumatic tire 10.
[FIG. 3] FIG. 3 is a partially exploded plan view of a carcass 40 and a belt layer 50.
[FIG. 4] FIG. 4 is a cross-sectional view of a pneumatic tire 10A.
[FIG. 5] FIG. 5 is a partially enlarged cross-sectional view of the pneumatic tire 10.
[FIG. 6] FIG. 6 is a partially exploded plan view of the carcass 40 and the belt layer 50.
[FIG. 7] FIG. 7 is an explanatory view (part 1) of the deformation suppression mechanism of the tire contact area by the second reinforcing belt (lower reinforcing belt).
[FIG. 8] FIG. 8 is an explanatory view (part 2) of the deformation suppression mechanism of the tire contact area by the second reinforcing belt (lower reinforcing belt).
[FIG. 9] FIG. 9 is an explanatory view (part 3) of the deformation suppression mechanism of the tire contact area by the second reinforcing belt (lower reinforcing belt).

### [Modes for Carrying out the Invention]

Hereinafter, the embodiment will be described based on the drawings. The same functions and structures are denoted by the same or similar reference numerals, and the description thereof will be omitted accordingly.

### [First Embodiment]

### (1) Overall schematic structure of tire

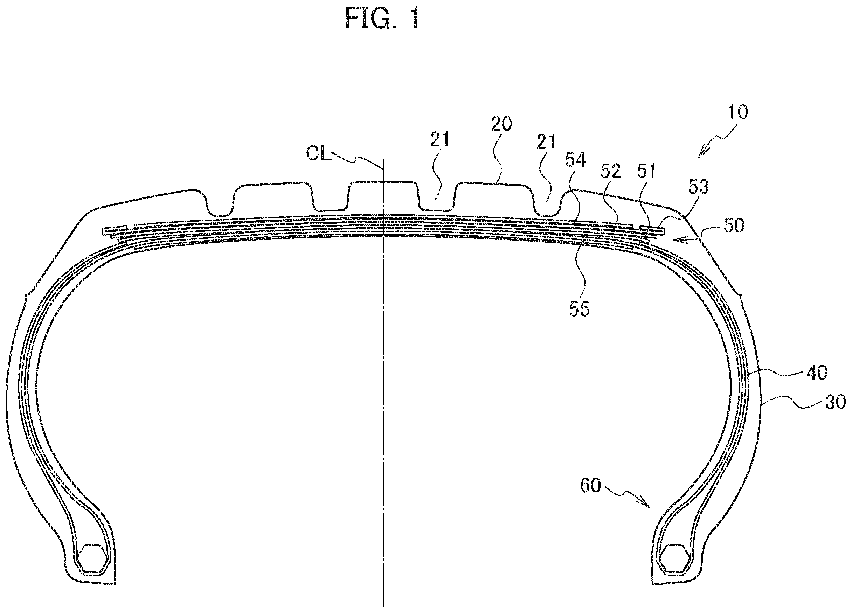

FIG. 1 is a cross-sectional view of the pneumatic tire 10 according to the present embodiment. Specifically, FIG. 1 is a cross-sectional view of the pneumatic tire 10 along the tire width direction and the tire radial direction. In FIG. 1, the cross-sectional hatching is omitted (hereinafter the same). A tire equatorial line CL indicates the center of the pneumatic tire 10 in the tire width direction and the tire circumferential direction.

The pneumatic tire 10 may be used for a general four-wheel standard passenger car, but particularly for a high-performance automobile with a high vehicle dynamics.

As shown in FIG. 1, the pneumatic tire 10 includes a tread 20, a tire side portion 30, a carcass 40, a belt layer 50, and a bead portion 60.

The tread 20 is in contact with the road surface. A pattern (not shown) is formed on the tread 20 according to the use environment of the pneumatic tire 10 and the type of the vehicle to which the tire is mounted. A circumferential groove 21 extending in the tire circumferential direction may be formed on the tread 20 in order to ensure drainage at least on a wet road surface.

The tire side portion 30 continues to the tread 20 and is located in tire radial direction inside of the tread 20. The tire side portion 30 is a region from the tire width direction outside end of the tread 20 to the upper end of bead portion 60. The tire side portion 30 may be called a sidewall or the like.

The carcass 40 forms a skeleton (tire skeleton) of the pneumatic tire 10. The carcass 40 is provided in tire radial direction inside of the belt layer 50. In the embodiment, the carcass 40 is composed of 2 pieces.

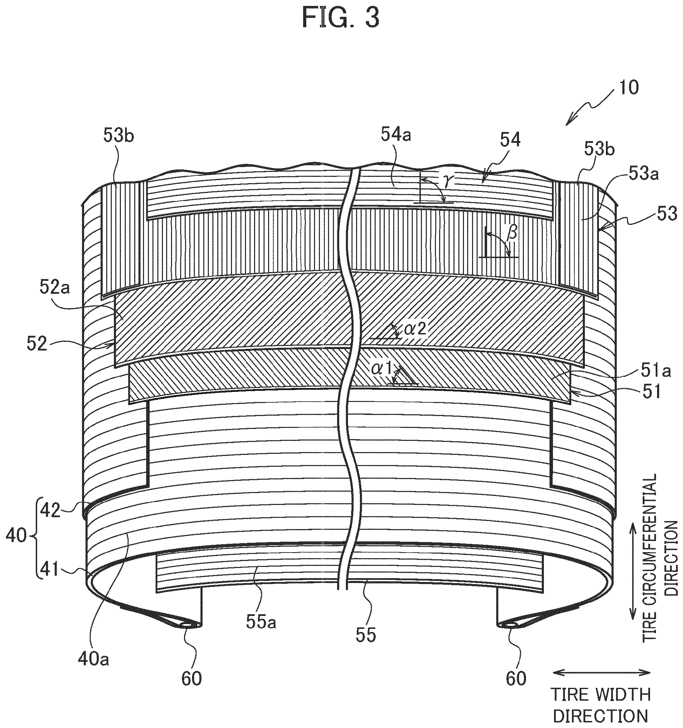

The carcass 40 is a radial structure in which a carcass cord 40a (Not shown in FIG. 1, see FIG. 3) radially arranged along tire radial direction is coated with a rubber material. However, it is not limited to a radial structure, and a bias structure in which the carcass cord 40a is arranged so as to cross tire radial direction may be used.

The belt layer 50 is provided on tire radial direction inside of the tread 20. The belt layer 50 may be composed of a plurality of belts. Specifically, the belt layer 50 includes a pair of crossing belt, specifically a crossing belt 51 and a crossing belt 52.

The crossing belt 51 and crossing belt 52 are provided in tire radial direction outside of the carcass 40. The crossing belt 52 is provided in tire radial direction outside of the crossing belt 51.

The crossing belt 51 and crossing belt 52 have belt cords. Specifically, in the tread plane view, a belt cord 51a (Not shown in FIG. 1, see FIG. 3) of the crossing belt 51 crosses a belt cord 52a (see FIG. 3) of the crossing belt 52.

The belt layer 50 includes a reinforcing belt that reinforces the structure of the pneumatic tire 10 in addition to the crossing belt 51 and the crossing belt 52. In this embodiment, the belt layer 50 includes a cap belt 53, an outside reinforcing belt 54, and an inside reinforcing belt 55.

The cap belt 53 is provided between the crossing belt 52 and the outside reinforcing belt 54. The cap belt 53 has a reinforcing cord 53a (Not shown in FIG. 1, see FIG. 3) extending in the tire circumferential direction. As shown in FIG. 1, the cap belt 53 is preferably shaped to cover outside end in the tire width direction of the crossing belt 51 and the crossing belt 52.

The outside reinforcing belt 54 is provided in tire radial direction outside rather than in the crossing belt 51 and the crossing belt 52. In this embodiment, the outside reinforcing belt 54 is provided in the tire width direction outside of the cap belt 53.

The inside reinforcing belt 55 is provided in tire radial direction inside of the carcass 40. The tire radial direction inside of the inside reinforcing belt 55 may be provided with an inner liner for preventing leakage of gas such as air filled in the inner space of the pneumatic tire 10 assembled to the rim wheel (not shown).

The bead portion 60 is connected to the tire side portion 30 and is located in tire radial direction inside of the tire side portion 30. The bead portion 60 is engaged with a rim wheel (not shown).

### (2) Structure of the belt layer 50

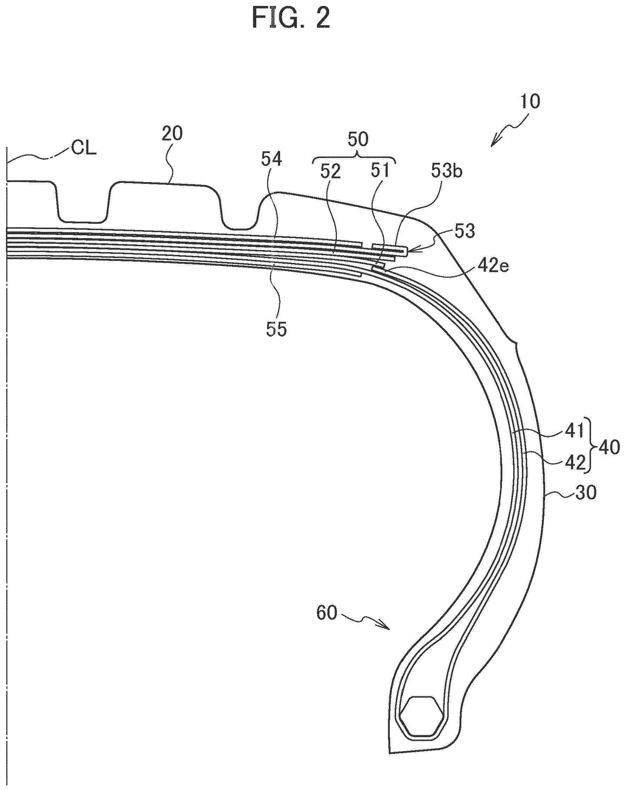

FIG. 2 is a partially enlarged cross-sectional view of the pneumatic tire 10. Specifically, FIG. 2 shows a cross-sectional view of the pneumatic tire 10 on one side relative to the tire equatorial line CL. FIG. 3 is a partially exploded plan view of the carcass 40 and the belt layer 50.

As shown in FIGS. 2 and 3, the carcass 40 has a body portion 41 and a folded portion 42. The body portion 41 extends over the tread 20, the tire side portion 30, and the bead portion 60 and the body portion 41 is a portion until it is folded back at the bead portion 60.

The folded portion 42 extends to the body portion 41 and is folded back to outside in the tire width direction via the bead portion 60. In this embodiment, the folded end 42e, which is outside end in the tire width direction of the folded portion 42, is provided in contact with the crossing belt 51. This structure of the carcass 40 may be called an envelope structure or the like. Note that the folded end 42e may not necessarily extend to the position of the crossing belt 51, and may be a structure (high turnup structure) terminating at the center part of the tire side portion 30 in tire radial direction .

The carcass 40 is constituted by coating the carcass cord 40a with a rubber material. The material of the carcass cord 40a is not particularly limited, but for example, the carcass cord 40a can be formed using organic fibers or steel.

The crossing belt 51 has the belt cord 51a. The belt cord 51a is provided inclined with respect to the tire width direction (and the tire circumferential direction). In this embodiment, the angle α (acute angle side) formed by the belt cord 51a with respect to the tire width direction, specifically, the angle α1 is about 45 degrees.

The crossing belt 52 has the belt cord 52a. The belt cord 52a is provided inclined with respect to the tire width direction (and the tire circumferential direction). In this embodiment, the angle α (acute angle side) formed by the belt cord 52a with respect to the tire width direction, specifically, the angle α2 is about 45 degrees.

In this embodiment, the belt cord 51a and the belt cord 52a are formed of steel. In this way, the belt cord 51a and the belt cord 52a are provided so as to intersect each other in the tread plane view. The crossing belt 51 (crossing belt 52) is constituted by coating the belt cord 51a (belt cord 52a) with a rubber material.

The cap belt 53 is provided in tire radial direction outside of a pair of the crossing belt 51 and the crossing belt 52. Specifically, the cap belt 53 is provided between the crossing belt 52 and the outside reinforcing belt 54.

The cap belt 53 has a reinforcing cord 53a wound along the tire circumferential direction. The reinforcing cord 53a extends along the tire circumferential direction. That is, the reinforcing cord 53a is provided so as to be substantially parallel to the tire circumferential direction, in other words, perpendicular to the tire width direction. Specifically, the angle ß formed by the reinforcing cords 53a with the tire width direction is about 90 degrees.

The cap belt 53 can be constituted by spirally winding a strip-like member formed by covering the reinforcing cord 53a with a rubber material along the tire circumferential direction. The cap belt 53 may be called a spiral belt.

The reinforcing cord 53a is preferably formed of an organic fiber having a strength equal to or greater than a predetermined value. Specifically, the reinforcing cord 53a may be a polyamide-based synthetic fiber (Specifically, nylon), an aramid fiber (Specifically, Kevlar), or a hybrid of both fibers.

In this embodiment, outside end of the cap belt 53 in the tire width direction is folded back to tire radial direction outside. Specifically, a layer portion 53b with a fold structure folded back to tire radial direction outside is formed at outside end of the cap belt 53 in the tire width direction.

The layer portion 53b is formed at a position to cover outside end in the tire width direction of crossing belt 51 and crossing belt 52. Note that the layer portion 53b does not necessarily have to be formed by folding the cap belt 53, and a layer portion 53b separate from the cap belt 53 may be provided.

The layer portion 53b is located in the tire width direction outside of the outside reinforcing belt 54. Preferably, the position of outside end portion in the tire width direction of the cap belt 53, that is, the layer portion 53b, in tire radial direction coincides with the position of the outside reinforcing belt 54 in tire radial direction. More specifically, it is preferable that the surface of tire radial direction outside of the layer portion 53b and the surface of tire radial direction outside of the outside reinforcing belt 54 are flush so as to prevent a step.

The outside reinforcing belt 54 has a reinforcing cord 54a. The reinforcing cord 54a extend in the tire width direction and along tire radial direction, and are disposed at a plurality of distances apart from each other. The outside reinforcing belt 54 is constituted by covering the reinforcing cords 54a with a rubber material.

In this embodiment, the reinforcing cords 54a are provided so as to be substantially parallel to the tire width direction. Specifically, the angle γ formed by the reinforcing cords 54a with the tire width direction is about 0 degrees.

The inside reinforcing belt 55 has a reinforcing cord 55a. The reinforcing cord 55a extend in the tire width direction and along tire radial direction, and are disposed at a plurality of distances apart from each other. inside reinforcing belt 55 is constituted by covering the reinforcing cords 55a with a rubber material.

The inside reinforcing belt 55 may have the same constitution as the outside reinforcing belt 54, although the size or the like is different. Therefore, the angle formed by the reinforcing cord 55a in the tire width direction is also about 0 degrees.

Preferably, the reinforcing cord 54a and the reinforcing cord 55a are formed of organic fibers having a strength equal to or greater than a predetermined value. In this embodiment, the reinforcing cord 54a and the reinforcing cord 55a are formed of aramid fibers (Specifically, Kevlar).

The width of the outside reinforcing belt 54 is preferably wider than the width of the inside reinforcing belt 55. The outside end of outside reinforcing belt 54 in the tire width direction is preferably located near the ground contact end of the tread 20 when normal load is loaded on the pneumatic tire 10 set at normal internal pressure. The width of the outside reinforcing belt 54 is preferably about 95% of the width of the crossing belt 52.

In Japan, normal internal pressure is the air pressure corresponding to the maximum load capacity in the YearBook of JATMA (Japan Automobile Tire Manufacturers Association), and normal load is the maximum load capacity (maximum load) corresponding to the maximum load capacity in the JATMA YearBook. Moreover, ETRTO in Europe, TRA in the United States, and tire standards in other countries correspond to this.

The outside end in the tire width direction of the inside reinforcing belt 55 may be located in the tire width direction inside than the ground end of the tread 20 when normal load is loaded on the pneumatic tire 10 set in normal internal pressure. However, the inside reinforcing belt 55 is preferably provided in the entire area extending from one end to the other end of the tread 20 in the tire width direction. Practically, the inside reinforcing belt 55 is preferably provided in the entire area extending from one end to the other end of the tread 20 with a width of less than about 90% of the width of the crossing belt 52.

Further, it is preferable that the outside reinforcing belt 54 and the inside reinforcing belt 55 are disposed at a similar distance from the neutral axis relative to the gauge of the tread 20 including the carcass 40 and the belt layer 50 to tire radial direction outside and the tire width direction outside, respectively. In the pneumatic tire 10, the neutral axis is generally at the position of the crossing belt 51.

A rubber layer such as cover rubber (not shown) may be provided between the cap belt 53 and the outside reinforcing belt 54, between tire radial direction inside of the inside reinforcing belt 55, and between the plies of the two-piece carcass 40.

### (1) Function and Effects

According to the above-described embodiment, the following function and effects can be obtained. Specifically, the pneumatic tire 10 includes the outside reinforcing belt 54 provided in tire radial direction outside rather than the crossing belt 52 and covered with a plurality of reinforcing cords 54a extending along the tire width direction and the tire radial direction and arranged at a predetermined distance from each other, and the inside reinforcing belt 55 provided in tire radial direction inside of the carcass 40 and covered with a plurality of reinforcing cords 55a extending along the tire width direction and the tire radial direction and arranged at a predetermined distance from each other.

Therefore, even in a situation where a large lateral force is added, the deformation of the belt layer 50 in which the outside reinforcing belt 54 and the inside reinforcing belt 55 induce the ground pressure relief of the tread 20 is suppressed. Thus, the generation of buckling can be suppressed, and steering stability can be further improved.

In particular, buckling can effectively suppress the generation of buckling even in the case where the circumferential groove 21 is formed for the purpose of securing drainability on a wet road surface, since compression and tension due to the rigid difference between the groove bottom and the groove end of the circumferential groove 21 are one of the causes when lateral force is added.

That is, with the pneumatic tire 10, steering stability, especially steering stability on a wet road surface, can be further improved by using a reinforcing belt (outside reinforcing belt 54 and inside reinforcing belt 55) having a cord extending along the tire width direction and the tire radial direction.

In this embodiment, the cap belt 53 is provided between the crossing belt 52 and the outside reinforcing belt 54. Since the reinforcing cord 53a of the cap belt 53 is arranged orthogonally with the reinforcing cord 54a of the outside reinforcing belt 54, deformation of the belt layer 50 can be suppressed more effectively. Thus, generation of buckling can be suppressed more effectively.

Further, since the reinforcing cord 53a of the cap belt 53 is arranged orthogonally with the reinforcing cord 54a of the outside reinforcing belt 54, the grounding length of the tread 20 is difficult to extend, and the fluctuation of ground contact area can be suppressed. As a result, stable performance can be achieved.

In this embodiment, the reinforcing cord 54a of the outside reinforcing belt 54 and the reinforcing cord 55a of the inside reinforcing belt 55 are formed by using organic fibers (aramid fibers) having a strength greater than a predetermined value. Such organic fibers are stronger in tensile deformation and lighter than steel. Therefore, the weight reduction and the strength of the pneumatic tire 10 can be achieved in high dimensions.

In this embodiment, the width of the outside reinforcing belt 54 is wider than the width of the inside reinforcing belt 55. Therefore, the occurrence of buckling can be effectively suppressed while preventing the failure of the inside reinforcing belt 55 at outside end in the tire width direction.

In this embodiment, outside end portion of the cap belt 53 in the tire width direction is folded back to tire radial direction outside, and the layer portion 53b is formed. The position of outside end portion in the tire width direction of the cap belt 53 in tire radial direction coincides with the position of the outside reinforcing belt 54 in tire radial direction. That is, the diameter sizes of the cap belt 53 (layer portion 53b) and the outside reinforcing belt 54 are generally similar.

Therefore, the difference between the cap belt 53 (layer portion 53b) and the outside reinforcing belt 54 can be eliminated, and the distribution of the shear force is made uniform. Thus, the generation of buckling can be effectively suppressed.

In this embodiment, the outside reinforcing belt 54 and the inside reinforcing belt 55 are disposed at a similar distance from the neutral axis relative to the gauge of the tread 20 including the carcass 40 and the belt layer 50 to tire radial direction outside and the tire width direction outside. Therefore, the out-of-plane bending rigidity of the belt layer 50 in the tire width direction can be enhanced, and the occurrence of buckling can be suppressed more effectively.

### (4) Modified examples

Although the embodiments have been described above, they are not limited to the description of the embodiments, and it is obvious to those skilled in the art that various modifications and improvements can be made.

For example, the pneumatic tire 10 was provided with the cap belt 53, but in embodiments not according to the present invention the cap belt 53 is not required. Alternatively, the cap belt 53 may be replaced with a reinforcement belt having a different arrangement angle of the reinforcement cord. The outside end of the cap belt 53 in the tire width direction may not be folded back to tire radial direction outside.

In the above-described embodiment, the pneumatic tire 10 was intended to improve steering stability especially on a wet road surface, but the pneumatic tire 10 may improve steering stability not only on a wet road surface but also on a dry road surface. However, since a larger lateral force is added on a dry road surface, it is preferable to further strengthen the structure of the pneumatic tire 10 to ensure durability. Further, since heat generation (heat storage) becomes more severe on a dry road surface, it is preferable to take measures such as thinning the gauge of the tread 20.

The pneumatic tire 10 may be mounted on either the front wheel (steering wheel) or the rear wheel (driving wheel). In this case, the type of the treating rubber, the angle of the belt cord or the reinforcing cord may be at least different between the front wheel and the rear wheel.

### [Second Embodiment]

Next, a pneumatic tire 10A according to this embodiment will be described. Hereinafter, the same parts as those of the pneumatic tire 10 according to the first embodiment will be omitted.

### (1) Overall schematic structure of the tire

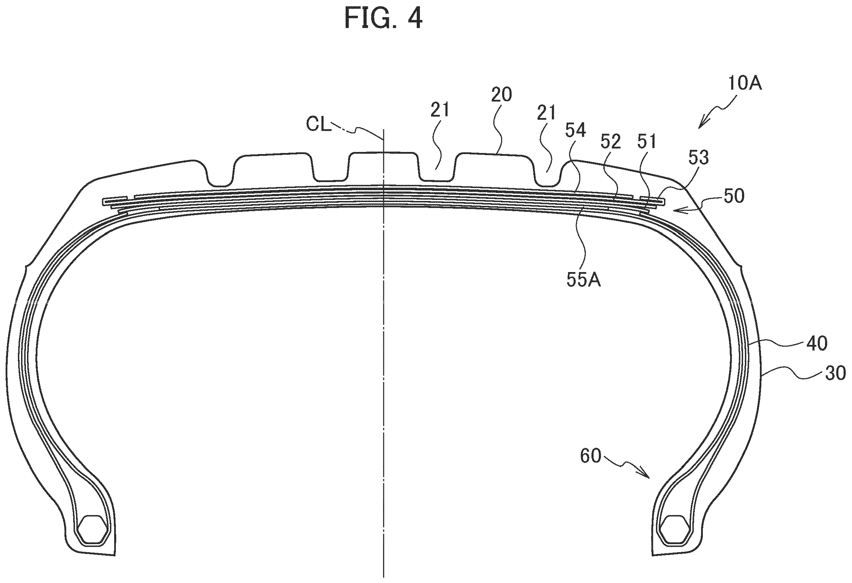

FIG. 4 is a cross-sectional view of the pneumatic tire 10A according to the present embodiment.

In the pneumatic tire 10A, tire radial direction inside of the carcass 40 may be provided with an inner liner to prevent leakage of gas such as air filled in the inner space of the pneumatic tire 10A assembled to the rim wheel (not shown).

The crossing belt 51 and the crossing belt 52 are provided in tire radial direction outside of the carcass 40. The crossing belt 52 is provided in tire radial direction outside of the crossing belt 51. The width of the crossing belt 51 may be wider or shorter than that of the crossing belt 52.

The belt layer 50 includes a reinforcing belt that reinforces the structure of the pneumatic tire 10A in addition to the crossing belt 51 and the crossing belt 52. In this embodiment, the belt layer 50 includes the cap belt 53, a first reinforcing belt 54A, and a second reinforcing belt 55A. The cap belt 53 may also be interpreted as a kind of reinforcing belt.

The cap belt 53 is provided between the crossing belt 52 and the first reinforcing belt 54A. The cap belt 53 has the reinforcing cord 53a (Not shown in FIG. 1, see FIG. 3) extending in the tire circumferential direction. As shown in FIG. 1, the cap belt 53 is preferably shaped to cover outside end in the tire width direction of the crossing belt 51 and the crossing belt 52.

The first reinforcing belt 54A is provided in tire radial direction outside rather than in the crossing belt 51 and the crossing belt 52. In this embodiment, the first reinforcing belt 54A is provided in the tire width direction outside of the cap belt 53.

The second reinforcing belt 55A is provided between the carcass 40 and crossing belt. In this embodiment, the second reinforcing belt 55A is provided between the carcass 40 and the crossing belt 51 provided in tire radial direction inside among the pair of crossing belt.

### (2) Structure of the belt layer 50

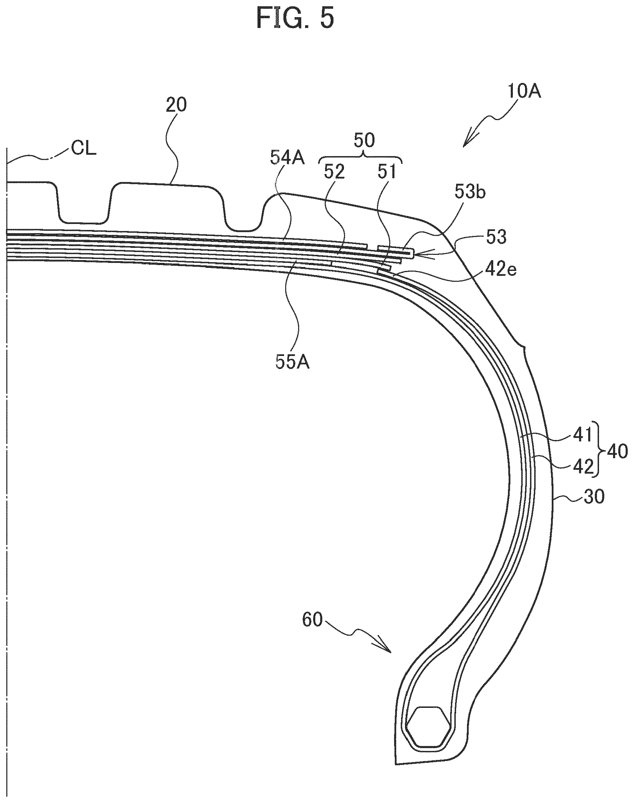

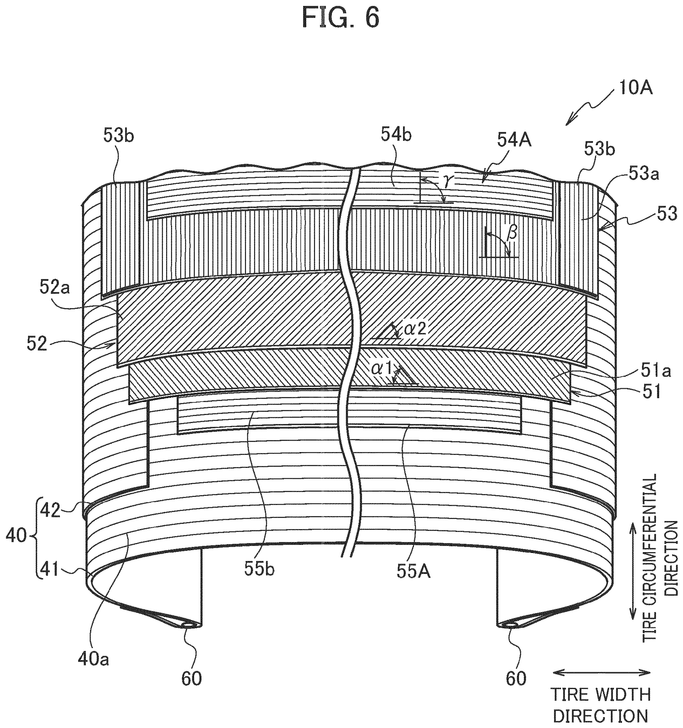

FIG. 5 is a partially enlarged cross-sectional view of the pneumatic tire 10A. Specifically, FIG. 5 shows a cross-sectional view of the pneumatic tire 10A on one side relative to tire equatorial line CL. FIG. 6 is a partially exploded plan view of the carcass 40 and the belt layer 50.

The folded portion 42 extends to the body portion 41 and is folded back to the tire width direction outside via the bead portion 60. In this embodiment, the folded end 42e, which is outside end in the tire width direction of folded portion 42, is provided so as to be in contact with the crossing belt 51. This structure of the carcass 40 may be called an envelope structure or the like. A gap may be provided between the folded portion 42 and the second reinforcing belt 55A without contacting the second reinforcing belt 55A at the folded end 42e.

Note that the folded end 42e may not necessarily extend to the position of the crossing belt 51, and may be a structure (high turn-up structure) terminating at a central portion of the tire side portion 30 in tire radial direction.

The layer portion 53b is located in the tire width direction outside of the first reinforcing belt 54 A. The position of outside end portion in the tire width direction of the cap belt 53, that is, the position of the layer portion 53b in tire radial direction, coincides with the position of the first reinforcing belt 54A in tire radial direction. Specifically, it is preferable that the surface of tire radial direction outside of the layer portion 53b and the surface of tire radial direction outside of the first reinforcing belt 54 A are flush so as to prevent a step.

The first reinforcing belt 54 A has a first reinforcing cord 54b. The first reinforcing cord 54b extends in the tire width direction and along tire radial direction, and is disposed at a plurality of distances apart from each other. The first reinforcing belt 54 A is constituted by coating a plurality of first reinforcing cords 54b with a rubber material.

In this embodiment, the first reinforcing cords 54b are provided so as to be substantially parallel to the tire width direction. Specifically, the angle γ formed by the first reinforcing cords 54b with the tire width direction is about 0 degrees.

The second reinforcing belt 55A has a second reinforcing cord 55b. The second reinforcing cord 55b extends in the tire width direction and along tire radial direction, and is disposed at a plurality of distances apart from each other. The second reinforcing belt 55A is constituted by covering the plurality of second reinforcing cords 55b with a rubber material.

The second reinforcing belt 55A may have the same constitution as the first reinforcing belt 54A, although the size or the like is different. Therefore, the angle formed by the second reinforcing cord 55b in the tire width direction is also about 0 degrees.

The first reinforcing cord 54b and the second reinforcing cord 55b are preferably formed by using a predetermined organic fiber, specifically, an organic fiber having a strength greater than a predetermined value. In this embodiment, the first reinforcing cord 54b and the second reinforcing cord 55b are formed by using an aramid fiber (Specifically, Kevlar).

The width of the first reinforcing belt 54A is preferably wider than the width of the second reinforcing belt 55A. The outside end of the first reinforcing belt 54A in the tire width direction is preferably located near the ground contact end of the tread 20 when normal load is loaded on the pneumatic tire 10A set at normal internal pressure.

A rubber layer such as cover rubber (not shown) may be provided between the cap belt 53 and the first reinforcing belt 54A, between tire radial direction inside of the second reinforcing belt 55A, and between the plies of the carcass 40 of the two-piece structure.

### (3) Function and effects

Next, the function and effects of the pneumatic tire 10A having a sandwich structure in which the first reinforcing belt 54A and the second reinforcing belt 5 A sandwich the crossing belt 51, the crossing belt 52, and the cap belt 53 will be described.

The first reinforcing belt 54A (may be called the upper reinforcing belt or outside reinforcing belt) has a function of a buffer layer from the tread 20 side (input side) to the crossing belt 51 and the crossing belt 52 and the carcass 40, and a function of sharing the tension generated in the area of the tread 20 with other belts.

The second reinforcing belt 55 A (may be called the lower reinforcing belt or inside reinforcing belt) has a function of suppressing deformation in the area of the tread 20 and a function of sharing the tension generated in the area of the tread 20 with other belts.

In a tire for a high-performance automobile with a high vehicle dynamics, it is common to increase the rigidity of the belt layer in order to exhibit a high lateral force (Fy). Thus, a high cornering force (CF) can be generated. On the other hand, when the belt layer is made high in rigidity, the rigidity level difference in the belt layer, which is a factor of crack development, becomes large, and the durability is easily reduced.

The pneumatic tire 10A can realize improvement of CF especially on a dry road surface while suppressing deterioration of durability due to crack development in the belt layer caused by such a rigidity step.

The pneumatic tire 10A is characterized in that the second reinforcing belt 55A is provided between the carcass 40 and the crossing belt (crossing belt 51) in comparison with a conventional similar tire. The function and effects of the second reinforcing belt 55A will be described further.

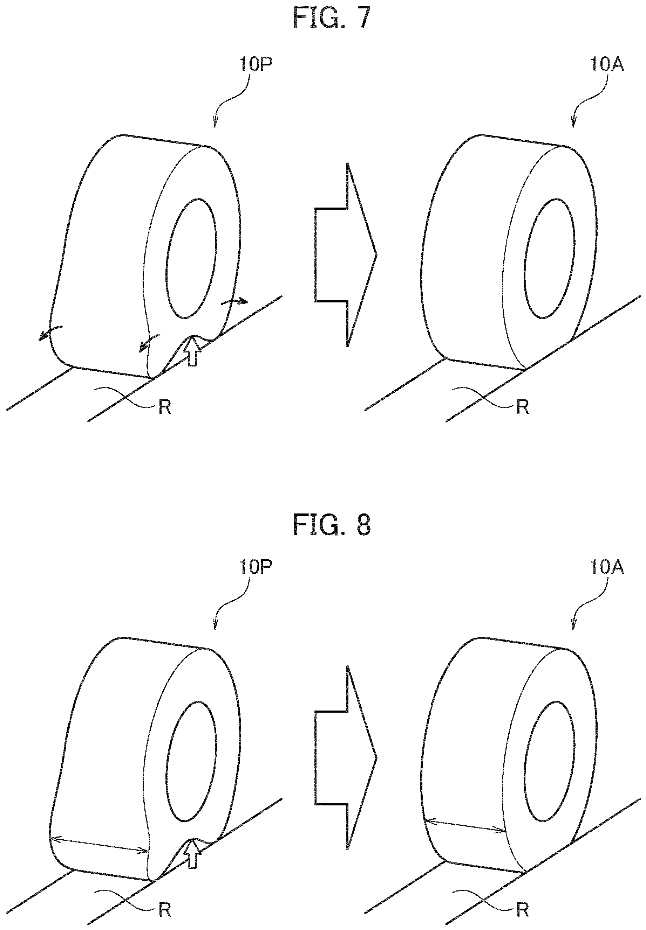

FIG. 7 through 9 are explanatory diagrams (part 1~3) of the deformation suppression mechanism of the tire contact area by the second reinforcing belt (lower reinforcing belt). Specifically, FIG. 7 schematically shows the contact shape between a conventional pneumatic tire 10P and the road surface R of the pneumatic tire 10A. Note that in FIG. 7 through 9, the contact shape is exaggerated for ease of understanding. The pneumatic tire 10P is not provided with a second reinforcing belt.

As shown in FIG. 7, in the case of the pneumatic tire 10P, when the tread is flexed in contact with the road surface R, a collapse occurs on the stepping on side and the kicking out side of the tread (see the thin line arrow in the figure), and the tread on the ground surface tends to rise in conjunction with the collapse (see the outlined arrow in the figure). In particular, such a phenomenon becomes a factor of the ground contact pressure relief at outside when mounted to the vehicle when lateral force (cornering force (CF)) occurs. Since the pneumatic tire 10A is provided with a second reinforcing belt, the lifting of the tread on the ground surface can be effectively suppressed.

Further, as shown in FIG. 8, in the case of the pneumatic tire 10P, when the above-mentioned falling occurs, deformation extending in the tire width direction always occurs (see the thin line arrow in the figure). Since the pneumatic tire 10A is provided with the second reinforcing belt, such deformation and lifting of the tread on the ground surface can be effectively suppressed.

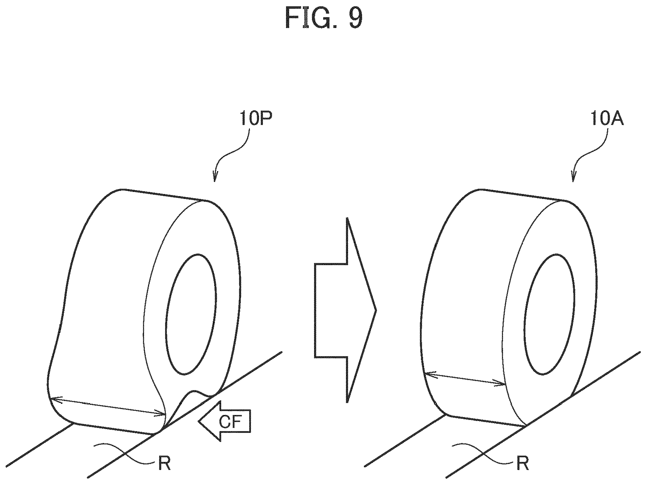

Further, as shown in FIG. 9, in the case of the pneumatic tire 10P, when lateral force (CF) occurs, a larger load is applied to the tread portion of outside when mounted to the vehicle, so that the tread becomes more easily deflected. Since the pneumatic tire 10A is provided with the second reinforcing belt, such deflection can be suppressed, and the tread lifting of the ground surface of outside when mounted to the vehicle can also be suppressed.

As described above, according to the pneumatic tire 10A, even when the cap belt 53 (spiral belt) is provided and at least either the tensile stiffness in the tire circumferential direction or the compressive stiffness in the tire width direction is high, the first reinforcing belt 54A and the second reinforcing belt 55A adopt a sandwich structure sandwiching the crossing belt 51, the crossing belt 52 and the cap belt 53, thereby preventing the ground contact pressure at outside when the vehicle is mounted when lateral force (cornering force (CF)) occurs, and effectively preventing the crack development caused by the rigidity step of the belt layer.

That is, according to the pneumatic tire 10A, while using the reinforcing belt (cap belt (spiral belt)) using a cord extending in the tire width direction and along tire radial direction, the deterioration of durability caused by the crack development in the belt layer 50 can be suppressed.

In this embodiment, the width of the first reinforcing belt 54A is wider than the width of the second reinforcing belt 55A. Therefore, the lifting of the tread on the ground plane can be effectively suppressed by the first reinforcing belt 54A on the ground plane side, while the crack growth of the belt layer 50 can be suppressed by the sandwich structure of the first reinforcing belt 54A and the second reinforcing belt 55A.

In this embodiment, the first reinforcing cord 54b and the second reinforcing cord 55b are formed by using organic fibers (aramid fibers) having a strength greater than a predetermined value. Such organic fibers are stronger in tensile deformation and lighter than steel. Therefore, the weight reduction and the strength of the pneumatic tire 10A can be made compatible in a high dimension.

### (4) Modified examples

Although the embodiments have been described above, they are not limited to the description of the embodiments, and it is obvious to those skilled in the art that various modifications and improvements can be made.

For example, the second reinforcing belt 55A may be provided between the crossing belt 51 and the crossing belt 52. Again, it may be interpreted that the second reinforcing belt 55A is provided between the carcass 40 and any of a pair of crossing belt, and the second reinforcing belt 55A is provided between the carcass and crossing belt.

In alternative embodiments, not falling under the definition of the claimed invention the cap belt 53 may be replaced with a reinforcing belt having a different arrangement angle of the first reinforcing cord. outside end of the cap belt 53 in the tire width direction need not be turned back to tire radial direction outside.

### [Explanation of Reference Numerals]

10, 10A Pneumatic tire
20 Tread
21 Circumferential groove
30 Tire side portion
40 Carcass
40a Carcass cord
41. Body portion
42. Folded portion
42e Folded end
50 Belt layer
51 Crossing belt
51a Belt cord
52 Crossing belt
52a Belt cord
53 Cap belt
53a Reinforcement cord
53b Layer portion
54 Outside reinforcement belt
54a Reinforcement cord
55 Inside reinforcement belt
55b Reinforcement cord
54A First reinforcement belt
54b First reinforcement cord
55A Second reinforcement belt
55b Second reinforcement cord
60 Bead portion

## Claims

1. A tire (10) provided with a carcass (40) forming tire skeleton, and a pair of crossing belts (51, 52) provided in a tire radial direction outside of the carcass (40) and having intersecting cords, wherein a first crossing belt (52) of the pair of crossing belts (51, 52) being provided in a tire radial direction outside of a second crossing belt (51) of the pair of crossing belts (51, 52), the tire (10) comprising:
an outside reinforcing belt (54) provided in the tire radial direction more radially outwardly than the pair of crossing belts (51, 52) and covered with a plurality of reinforcing cords (54a) extending along a tire width direction and a tire radial direction and arranged at a predetermined distance from each other; and
an inside reinforcing belt (55) provided in a tire radial direction inside of the carcass (40) and covered with a plurality of reinforcing cords (55b) extending along the tire width direction and the tire radial direction and arranged at a predetermined distance from each other,
**characterised in that**
the tire (10) further comprises a cap belt (53) having a reinforcing cord (53a) wound in a tire circumferential direction, wherein the cap belt (53) is provided between the first crossing belt (52) and the outside reinforcing belt (54);
wherein an outside end portion of the cap belt (53) in the tire width direction is folded back to the tire radial direction outside;
wherein a position in the tire radial direction of an outside end portion in the tire width direction of the cap belt (53) coincides with a position in tire radial direction of the outside reinforcing belt (54).

2. The tire according to claim 1, wherein the reinforcing cords (54a, 53a) are formed of an organic fiber.

3. The tire according to claim 1, wherein a width of the outside reinforcing belt (54) is wider than a width of the inside reinforcing belt (55).

4. A tire (10A) provided with a carcass (40) forming tire skeleton, and a pair of crossing belts (51, 52) provided in a tire radial direction outside of the carcass (40) and having intersecting cords (51a, 52a), wherein a first crossing belt (52) of the pair of crossing belts (51, 52) being provided in a tire radial direction outside of a second crossing belt (51) of the pair of crossing belts (51, 52), the tire (10A) comprising:
a first reinforcing belt (54A) provided in the tire radial direction more outwardly than the pair of crossing belts (51, 52) and covering a plurality of first reinforcing cords (54b) extending along a tire width direction and a tire radial direction and arranged at a predetermined distance from each other; and
a second reinforcing belt (55A) provided between the carcass (40) and the crossing belt and covering a plurality of second reinforcing cords (55b) extending along the tire width direction and the tire radial direction and arranged at a predetermined distance from each other,
**characterised in that**
the tire (10A) further comprises a cap belt (53) having a reinforcing cord (53a) extending in a tire circumferential direction, wherein the cap belt (53) is provided between the first crossing belt (52) and the first reinforcing belt (54A);
wherein an outside end portion of the cap belt (53) in the tire width direction is folded back to the tire radial direction outside;
wherein a position in the tire radial direction of an outside end portion in the tire width direction of the cap belt (53) coincides with a position in tire radial direction of the first reinforcing belt (54A).

5. The tire (10A) according to claim 4, wherein the second reinforcing cord (55b) is formed of a predetermined organic fiber.

6. The tire (10A) according to claim 4, wherein a width of the first reinforcing belt (54A) is wider than a width of the second reinforcing belt (55A).

## Patentansprüche

1. Reifen (10) mit einer Karkasse (40), die das Reifenskelett bildet, und zwei sich kreuzende Gurte (51, 52), die in radialer Richtung außerhalb der Karkasse (40) angeordnet sind und sich kreuzende Schnüre aufweisen, wobei ein erster sich kreuzender Gurt (52) des Gurtpaares (51, 52) in radialer Richtung außerhalb eines zweiten sich kreuzenden Gurts (51) des Gurtpaares (51, 52) angeordnet ist, der Reifen (10) umfassend:
ein äußerer Verstärkungsgurt (54), der in Reifenradiusrichtung radial weiter außen liegt als die beiden sich kreuzenden Gurte (51, 52) und mit einer Vielzahl von Verstärkungsschnüren (54a) bedeckt ist, die sich in Reifenbreitenrichtung und Reifenradiusrichtung erstrecken und in einem vorbestimmten Abstand zueinander angeordnet sind; und
ein innerer Verstärkungsgurt (55), der in radialer Richtung innerhalb der Karkasse (40) angeordnet und mit einer Vielzahl von Verstärkungsschnüren (55b) bedeckt ist, die sich in Breitenrichtung und radialer Richtung des Reifens erstrecken und in einem vorbestimmten Abstand zueinander angeordnet sind,
**dadurch gekennzeichnet, dass**
der Reifen (10) weiter umfasst
ein Deckgurt (53), der eine in Umfangsrichtung des Reifens gewickelten Verstärkungsschnur (53a) aufweist, wobei der Deckgurt (53) zwischen dem ersten kreuzenden Gurt (52) und dem äußeren Verstärkungsgurt (54) angeordnet ist;
wobei ein äußerer Endabschnitt des Deckgurts (53) in Reifenbreitenrichtung nach außen in Reifenradiusrichtung zurückgefaltet ist;
wobei eine Position des äußeren Endabschnitts des Deckgurts (53) in Reifenradiusrichtung in Reifenbreitenrichtung mit einer Position des äußeren Verstärkungsgurts (54) in Reifenradiusrichtung übereinstimmt.

2. Reifen nach Anspruch 1, wobei die Verstärkungsschnüre(54a, 53a) aus einer organischen Faser gebildet sind.

3. Reifen nach Anspruch 1, wobei die Breite des äußeren Verstärkungsgurts (54) größer ist als die Breite des inneren Verstärkungsgurts (55).

4. Reifen (10A) mit einer Karkasse (40), die das Reifenskelett bildet, und zwei sich kreuzende Gurte (51, 52), die in radialer Richtung außerhalb der Karkasse (40) angeordnet sind und sich kreuzende Schnüre (51a, 52a) aufweisen, wobei ein erster sich kreuzender Gurt (52) des Gurtpaares (51, 52) in radialer Richtung außerhalb eines zweiten sich kreuzenden Gurts (51) des Gurtpaares (51, 52) angeordnet ist, der Reifen (10A) umfassend:
ein erster Verstärkungsgurt (54A), der in radialer Richtung des Reifens weiter außen liegt als die beiden sich kreuzenden Gurte (51, 52) und eine Vielzahl von ersten Verstärkungsschnüren (54b) bedeckt, die sich in Reifenbreite und radialer Richtung erstrecken und in einem vorbestimmten Abstand zueinander angeordnet sind; und
ein zweiter Verstärkungsgurt (55A), der zwischen der Karkasse (40) und dem kreuzenden Gurt angeordnet ist und eine Vielzahl von zweiten Verstärkungsschnüren (55b) bedeckt, die sich in Reifenbreitenrichtung und Reifenradiusrichtung erstrecken und in einem vorbestimmten Abstand zueinander angeordnet sind,
**dadurch gekennzeichnet, dass**
der Reifen (10A) weiter umfasst
ein Deckgurt (53), der eine Verstärkungsschnur (53a) aufweist, die sich in Umfangsrichtung des Reifens erstreckt, wobei der Deckgurt (53) zwischen dem ersten kreuzenden Gurt (52) und dem ersten Verstärkungsurt (54A) angeordnet ist;
wobei ein äußerer Endabschnitt des Deckgurts (53) in Reifenbreitenrichtung nach außen in Reifenradiusrichtung zurückgefaltet ist;
wobei eine Position des äußeren Endabschnitts des Deckgurts (53) in Reifenradiusrichtung in Reifenbreitenrichtung mit einer Position des ersten Verstärkungsgurts (54A) in Reifenradiusrichtung übereinstimmt.

5. Reifen (10A) nach Anspruch 4, wobei die zweite Verstärkungsschnur (55b) aus einer vorbestimmten organischen Faser gebildet ist.

6. Reifen (10A) nach Anspruch 4, wobei die Breite des ersten Verstärkungsgurts (54A) größer ist als die Breite des zweiten Verstärkungsgurts (55A).

## Revendications

1. Pneu (10) pourvu d'une carcasse (40) formant le squelette du pneu, et d'une paire de ceintures croisées (51, 52) prévues dans une direction radiale de pneu à l'extérieur de la carcasse (40) et présentant des câbles entrecroisés, dans lequel une première ceinture croisée (52) de la paire de ceintures croisées (51, 52) est prévue dans une direction radiale de pneu à l'extérieur d'une seconde ceinture croisée (51) de la paire de ceintures croisées (51, 52), le pneu (10) comprenant :
une ceinture de renfort extérieure (54) prévue dans la direction radiale de pneu plus radialement vers l'extérieur que la paire de ceintures croisées (51, 52) et recouverte d'une pluralité de câbles de renfort (54a) s'étendant dans une direction de largeur de pneu et une direction radiale de pneu et disposés à une distance prédéterminée les uns des autres ; et
une ceinture de renfort intérieure (55) prévue dans une direction radiale de pneu à l'intérieur de la carcasse (40) et recouverte d'une pluralité de câbles de renfort (55b) s'étendant dans la direction de largeur de pneu et la direction radiale de pneu et disposés à une distance prédéterminée les uns des autres,
**caractérisé en ce que**
le pneu (10) comprend en outre
une ceinture de capuchon (53) présentant un câble de renfort (53a) enroulé dans une direction circonférentielle de pneu, dans lequel la ceinture de capuchon (53) est prévue entre la première ceinture croisée (52) et la ceinture de renfort extérieure (54) ;
dans lequel une partie d'extrémité extérieure de la ceinture de capuchon (53) dans la direction de largeur de pneu est repliée vers l'extérieur dans la direction radiale de pneu ;
dans lequel une position dans la direction radiale de pneu d'une partie d'extrémité extérieure dans la direction de largeur de pneu de la ceinture de capuchon (53) coïncide avec une position dans la direction radiale de pneu de la ceinture de renfort extérieure (54).

2. Pneu selon la revendication 1, dans lequel les câbles de renfort (54a, 53a) sont formés d'une fibre organique.

3. Pneu selon la revendication 1, dans lequel une largeur de la ceinture de renfort extérieure (54) est plus large qu'une largeur de la ceinture de renfort intérieure (55).

4. Pneu (10A) pourvu d'une carcasse (40) formant le squelette du pneu, et d'une paire de ceintures croisées (51, 52) prévues dans une direction radiale de pneu à l'extérieur de la carcasse (40) et présentant des câbles entrecroisés (51a, 52a), dans lequel une première ceinture croisée (52) de la paire de ceintures croisées (51, 52) est prévue dans une direction radiale de pneu à l'extérieur d'une seconde ceinture croisée (51) de la paire de ceintures croisées (51, 52), le pneu (10A) comprenant :
une première ceinture de renfort (54A) prévue dans la direction radiale de pneu plus vers l'extérieur que la paire de ceintures croisées (51, 52) et recouvrant une pluralité de premiers câbles de renfort (54b) s'étendant dans une direction de largeur de pneu et une direction radiale de pneu et disposés à une distance prédéterminée les uns des autres ; et
une seconde ceinture de renfort (55A) prévue entre la carcasse (40) et la ceinture croisée et recouvrant une pluralité de seconds câbles de renfort (55b) s'étendant dans la direction de largeur de pneu et la direction radiale de pneu et disposés à une distance prédéterminée les uns des autres,
**caractérisé en ce que**
le pneu (10A) comprend en outre
une ceinture de capuchon (53) présentant un câble de renfort (53a) s'étendant dans une direction circonférentielle de pneu, dans lequel la ceinture de capuchon (53) est prévue entre la première ceinture croisée (52) et la première ceinture de renfort (54A) ;
dans lequel une partie d'extrémité extérieure de la ceinture de capuchon (53) dans la direction de largeur de pneu est repliée vers l'extérieur dans la direction radiale de pneu ;
dans lequel une position dans la direction radiale de pneu d'une partie d'extrémité extérieure dans la direction de largeur de pneu de la ceinture de capuchon (53) coïncide avec une position dans la direction radiale de pneu de la première ceinture de renfort (54A).

5. Pneu (10A) selon la revendication 4, dans lequel le second câble de renfort (55b) est formé d'une fibre organique prédéterminée.

6. Pneu (10A) selon la revendication 4, dans lequel une largeur de la première ceinture de renfort (54A) est plus large qu'une largeur de la seconde ceinture de renfort (55A).
